# EUROPEAN PATENT APPLICATION

(11) **EP 3 435 643 A1**
(43) Date of publication of application: **30.01.2019**
(21) Application number: 17183901.2
(22) Date of filing: 29.07.2017
(51) Int. Cl.: H04M 1/725, H04L 12/28

(54) **A SYSTEM AND METHOD FOR CONTROL OF AN APPLIANCE BY VOICE**

(71) Applicant: Advanced Digital Broadcast S.A., 1262 Eysins (CH)
(72) Inventor: Adamski, Artur, 65-119 Zielona Gora (PL)
(74) Representative: Kancelaria Eupatent.pl Sp. z.o.o

(57) **Abstract**

A system for controlling an appliance (130) by voice, the system comprising: a mobile device (110) comprising: a voice recognition manager (112) configured to receive from a user, via a microphone (220), a voice command and to recognize the voice command; a commands table (253) configured to store voice commands and corresponding IR actions; a wireless data transmission interface (230); and a user application (111) configured to determine, at the commands table (253), the IR action corresponding to the recognized voice command and to output the IR action via the wireless data transmission interface (230); an RCU device (120) integrated with the controlled appliance (130) and comprising: a wireless data transmission interface (330); an IR interface (320) to the RCU controller of the controlled appliance (130); a codes table (353) configured to store IR actions and corresponding IR codes for the controlled appliance (130); and an IR action execution unit (312) configured to receive the IR action via the wireless data transmission interface (330), to determine, at the codes table (353), the IR code corresponding to the received IR action and to output the determined IR code, via the IR interface (320), to the controlled appliance (130).

## Description

### TECHNICAL FIELD

The present disclosure relates to an extended wireless control of electronic appliances by voice commands.

### BACKGROUND

Voice control technology becomes a major user interface for modern appliances, due to the fact that voice commands are the most natural communication language for humans. Widely understood 'smart home systems' are using hands free control technology in more and more products and the usage tendency is growing.

Currently available voice controlled devices have dedicated built-in systems, designed and adapted closely for particular brands or device models. Each manufacturer has their own proprietary voice control technology, used exclusively for their own products. This uniqueness makes the systems incompatible with each other.

There are known universal devices dedicated for devices without built-in voice control systems, that allow to extend the abilities of these devices by voice control features. However, such universal devices, due to their versatility, are quite complex to be setup, making them useful for technology enthusiasts rather than for a typical user. In addition, due to their complexity, they are quite large in dimensions and relatively expensive, which even more limits their applicability.

There is a need to design an improved system for extending the functionality of legacy devices over voice control features, especially legacy equipment which is originally infra-red controlled.

### SUMMARY

There is disclosed a system for controlling an appliance by voice, the system comprising: a mobile device comprising: a voice recognition manager configured to receive from a user, via a microphone, a voice command and to recognize the voice command; a commands table configured to store voice commands and corresponding IR actions; a wireless data transmission interface; and a user application configured to determine, at the commands table, the IR action corresponding to the recognized voice command and to output the IR action via the wireless data transmission interface; an RCU device integrated with the controlled appliance and comprising: a wireless data transmission interface; an IR interface to the RCU controller of the controlled appliance; a codes table configured to store IR actions and corresponding IR codes for the controlled appliance; and an IR action execution unit configured to receive the IR action via the wireless data transmission interface, to determine, at the codes table, the IR code corresponding to the received IR action and to output the determined IR code, via the IR interface, to the controlled appliance.

Preferably, the wireless data transmission interface is a Wi-Fi interface.

Preferably, the sytem further comprises a wireless router for handling communication between the mobile device and the RCU device.

Preferably, the voice recognition manager is configured to communicate with an external voice recognition server configured to recognize the voice command.

Preferably, the commands table comprises predefined commands.

Preferably, the IR actions are transmitted as HTTP commands.

Preferably, the mobile device has a form of smart speakers powered by a cloud-based artificial intelligence for communicating with the user via voice commands.

There is also disclosed a method for controlling an appliance by voice, the method comprising: at a mobile device comprising: a microphone; a commands table configured to store voice commands and corresponding IR actions; and a wireless data transmission interface : receiving from a user a voice command; recognizing the voice command; determining, at the commands table, the IR action corresponding to the recognized voice command; and outputting the IR action via the wireless data transmission interface; at an RCU device being a component integrated with the controlled appliance and comprising: a wireless data transmission interface; an IR interface to the RCU controller of the controlled appliance; and a codes table configured to store IR actions and corresponding IR codes for the controlled appliance : receiving the IR action via the wireless data transmission interface; determining, at the codes table, the IR code corresponding to the received IR action; and outputting the determined IR code, via the IR interface, to the controlled appliance.

There is also disclosed a computer program comprising program code means for performing all the steps of the computer-implemented method as described above when said program is run on a computer, as well as a computer readable medium storing computer-executable instructions performing all the steps of the computer-implemented method as described above when executed on a computer.

### BRIEF DESCRIPTION OF DRAWINGS

The system and method presented herein are presented by means on example embodiments on a drawing, wherein:
Fig. 1 presents elements of a system for a voice controlled STB;
Fig. 2A presents a typical set-up of a mobile device 110/200;
Fig. 2B presents details of a connectivity module 230 of the mobile device;
Fig. 2C presents data stored in a memory 250 of the mobile device;
Fig. 3A presents a structure of an RCU device 120/300 with Wi-Fi interface;
Fig. 3B presents data stored in a memory 350 of the RCU device;
Fig. 4 presents a structure of the Set Top Box (STB) 400/130;
Fig. 5 presents a system operation flow chart;
Fig. 6 presents a flow chart representing details of the procedure performed by the mobile device;
Fig. 7 presents a flow chart representing details of the procedure performed by the RCU device;

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

An example embodiment related to a television set-top box (STB) will be explained below. However, the presented technical concepts are also applicable to other infra-red (IR) controlled appliances, such as audio Hi-Fi systems, TV sets, light dimmers, game consoles, etc.

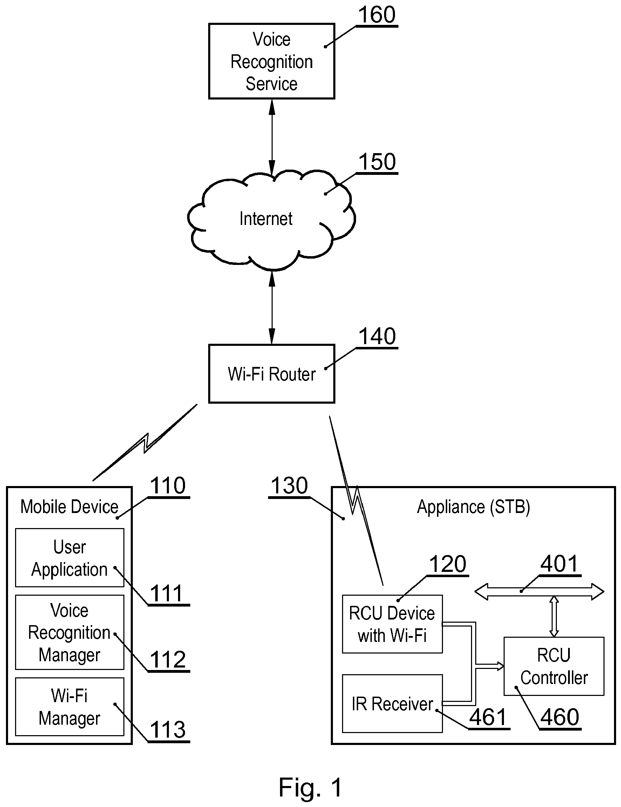

Fig. 1 presents elements of a system for a voice controlled STB. The system comprises an RCU device 120, including software and an IR LED transmitter, used to control the STB 130 using an IR signal. The system further comprises a mobile device 110 which hosts a user application 111 and a voice recognition manager 112 where the mobile device 110 communicates to the Internet 150 and the RCU device 120 directly or over a wireless router 140. In the presented example, the wireless router uses Wi-Fi technology, but other wireless transmission interfaces, such as Bluetooth, ZigBee, GSM, can be used as well. The Internet connection provides access to a voice recognition service 160, which in cooperation with the voice recognition manager 112 and the user application 111, translate voice commands to IR actions which are further emitted to the RCU device 120.

The RCU device 120 is a component integrated with the controlled appliance 130 and communicates with its RCU controller 460.

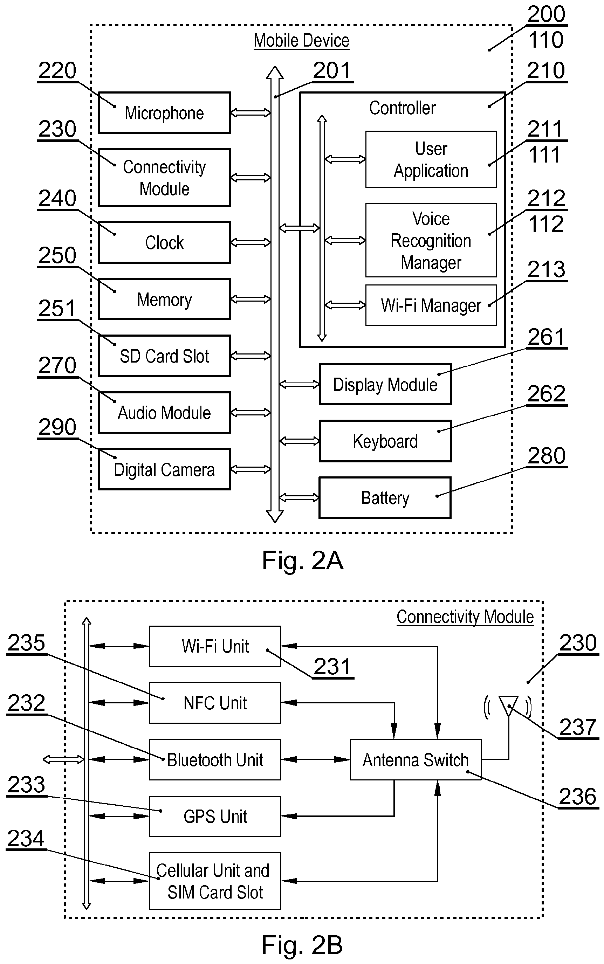

Fig. 2A presents a typical set-up of the mobile device 110/200. The mobile device 200 comprises a connectivity module 230 responsible for wirelessly receiving and/or transmitting data. A memory 250 is used for storing data (including data associated with the cooperating user devices) as well as software (user application 211/111). A clock module 240 is configured to provide clock reference for other modules of the system. A microphone 220 is configured to receive voice commands from the user to be then processed by the voice recognition manager 212/112. A battery 280 for supplying power to the mobile device. A controller 210 managing the user application 211/111, the voice recognition manager 212/112 and the wireless manager 213.

Other, typical, but optional modules of the mobile device are a display module 261 configured to display the GUI to the user, a keyboard 262 operating as an input interface for the mobile device, an audio module 270 configured to generate audible signals and/or an external memory slot such as an SD card slot 251 configured to receive and operate an external memory unit and/or a digital camera 290.

A bidirectional data bus 201 may be employed to enable communication between the modules and the controller 210.

Fig. 2B presents details of the connectivity module 230 of the mobile device. The communication means may be any one of or any subgroup of the following: Wi-Fi 231, Bluetooth 232, Near-field communication NFC 235, GPS 233, cellular telephony communication unit (such as GSM, 3G, 4G and similar) communicating with a SIM card slot 234, or similar. The different communication means may be managed by an antenna switch 236 connected to an antenna module 237 that may comprise one or more types of antennas.

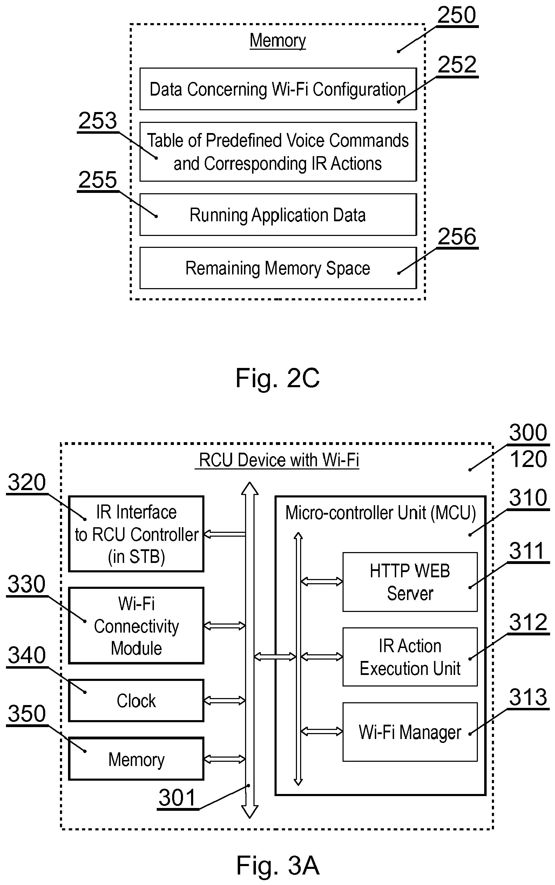

Fig. 2C presents data stored in the memory 250 of the mobile device. Data is stored in containers, such as tables or other data types.

A Wi-Fi configuration data set 252 comprises information concerning configuration of the connected devices such as the RCU device 120.

A predefined commands table 253 comprises information concerning most common, predefined, user voice commands and their correlation with the IR actions receivable by the RCU device 120.

A running application data set 255 comprises information concerning currently launched applications, which need to store temporary data when operating.

The remaining memory space 256 can be used for storing other data, depending on system needs.

The voice recognition manager 212/112 is configured at least to receive from the user, via the microphone 220, a voice command and to recognize the voice command.

The user application 211/111 is configured at least to determine, at the commands table 253, the IR action corresponding to the recognized voice command and to output the IR action via the wireless interface 231.

The Wi-Fi manager 213 is configured at least to communicate with the RCU device.

Fig. 3A presents a structure of the RCU device 120/300 with Wi-Fi interface. The RCU device 120/300 comprises an IR interface 320 for sending IR codes to the RCU controller 460 of the STB 130. A Wi-Fi connectivity module 330 is responsible for wirelessly receiving and/or transmitting data, for example exchanging data with the mobile device. A clock module 340 is configured to provide clock reference for other modules of the device. A memory 350 is used for storing data (including data associated with the cooperating appliances) as well as software.

A micro-controller unit (MCU) 310 comprises a plurality of units configured to provide the functionality of the system. A HTTP (Hypertext Transfer Protocol) WEB server 311 is configured to receive the HTTP commands from the mobile device. An IR action execution unit 312 is configured to recognize, using the codes table 353, the IR code corresponding to the received IR action and to send the recognized IR code, via the IR Interface 320 to the RCU controller 460 of the controlled appliance 130. A Wi-Fi manager 313 is configured to control the Wi-Fi connectivity module.

A bidirectional data bus 301 may be employed to enable communication between the modules and the micro-controller 310.

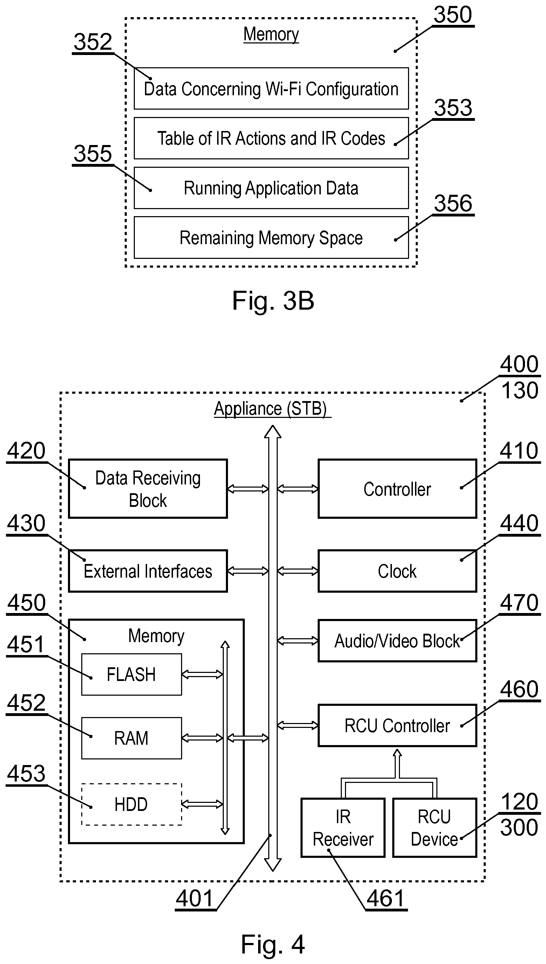

Fig. 3B presents data stored in the memory 350 of the RCU device. Data is stored in containers, such as tables or other data types.

A Wi-Fi configuration data set 352 comprises information concerning configuration of the network connection to the mobile device.

A codes table 353 comprises information on IR codes which correspond to the IR actions and which can be sent to the controlled appliance, such as the STB.

A running application data set 355 comprises information concerning currently launched applications, which need to store temporary data when operating.

The remaining memory space 356 can be used for storing other data, depending on system needs.

Fig. 4 presents a structure of the STB 400/130 wherein mainly the elements essential for operation of the system of the invention are shown.

A controller 410 comprises a plurality of units configured to provide the functionality of the system as described herein.

The STB 400/130 operates utilizing memory blocks 450, including RAM 452, Flash 451 blocks and optionally a hard disk drive (HDD) 453 or another type of mass storage that can be used to store video or other data locally at the STB, but is not essential for its operation.

A clock module 440 is configured to provide timing data necessary for cooperation of the device units.

A data receiving block 420 is configured to receive downstream data, such as video content, from the broadcasting distribution network. The data receiving block 420 (also called a front-end block) may comprise a plurality of tuners (such as satellite, cable, terrestrial or IPTV tuners), wherein one of the tuners receives content to be displayed at a television screen to which the STB is directly connected (e.g. the STB 400 connected to a TV set) and another tuner receives content to be recorded at the HDD 453.

External interfaces 430, such as an Ethernet interface, are configured to communicate, via at least one transmission channel, with the Ethernet (IP) network or a wireless network, in order to receive applications and/or content recommendation data, as well as to transmit user or STB statistic data.

The STB is operable by the user via a standard remote control unit (RCU) that communicates, typically via an IR receiver 461, and by the RCU device 120.

An audio/video block 470 is an example of a content presentation block and configured to decode the received content, convert it to an audio/video format suitable for presentation to the user, and transmit the converted content via a transmission channel to the TV set to which the STB is directly connected.

All modules of the STB communicate with each other via one or more internal data buses 401.

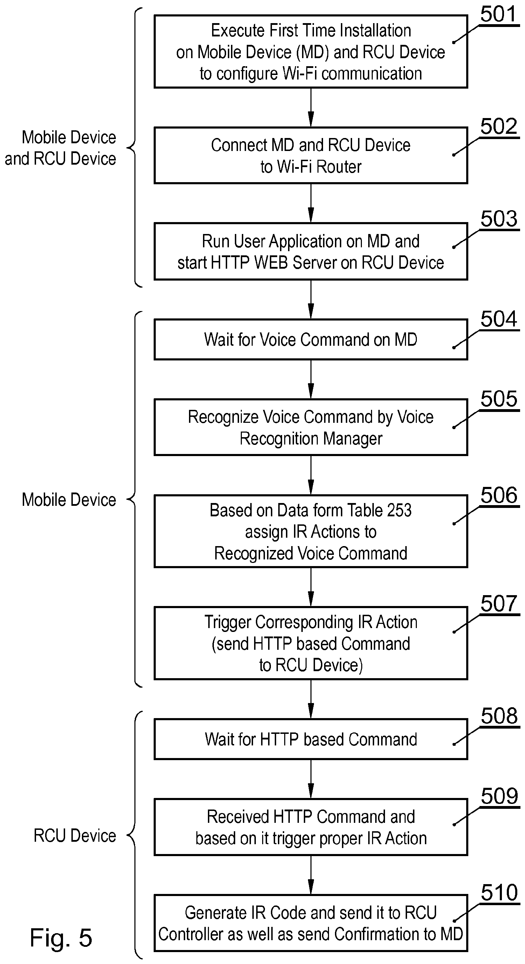

Fig. 5 presents a system operation flow chart. In a first step 501 a first time installation is executed on the mobile device and the RCU device to configure the Wi-Fi communication. In step 502 a connection of the Wi-Fi router to the mobile device and the RCU device is established. In step 503 the user application is started on the mobile device and the HTTP WEB server is started on the RCU device. Next steps 504-507 concern the operation of the mobile device. In step 504 the system waits for the user voice command to be input via the microphone of the mobile device. Next, in step 505 the voice command is recognized (for example converted to a standardized form, such as a text string) by the voice recognition manager, which may communicate over the Internet with the voice recognition service. In step 506, basing on data from the table 253 with voice commands, an IR action corresponding to the recognized voice command is determined. In step 507 the corresponding IR action is sent to the RCU device, for example in a form of a HTTP based command. The last three steps 508-510 relate to the operations performed by the RCU device. In step 508 the RCU device waits for the HTTP based command. Next in step 509 the proper IR action is triggered basing on the received HTTP command. In the last step 510 a proper IR code is generated and sent by the IR Interface to the RCU Controller 460 of the controlled appliance 130 and a confirmation of sending the IR code is sent to the mobile device.

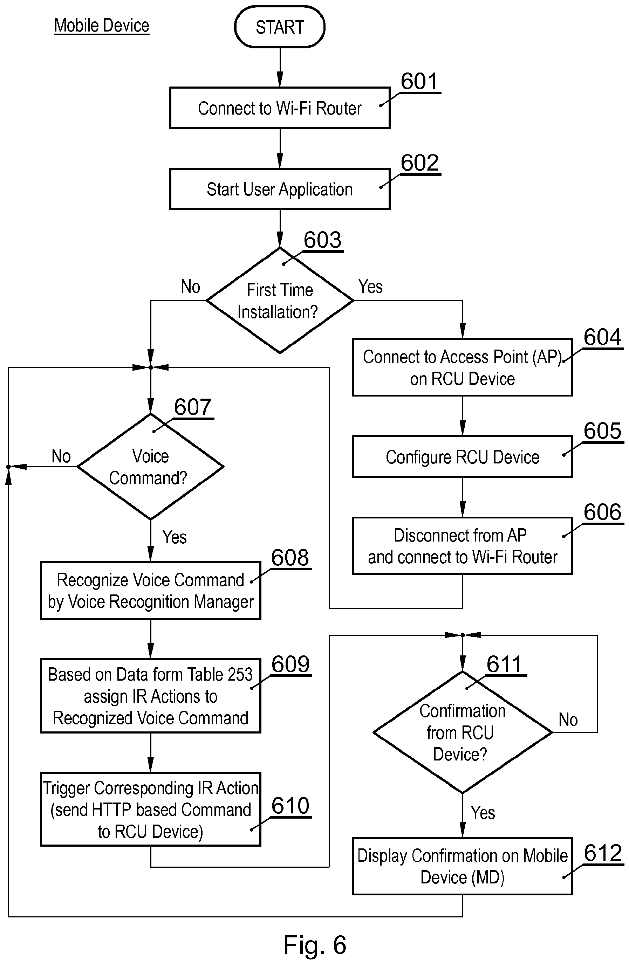

Fig. 6 presents a flow chart representing details of the procedure performed by the mobile device. In the first step 601 the connection of the mobile device to the Wi-Fi router is established. Next in step 602 the user application is launched. In step 603 it is checked if it is the first time installation. If yes, in step 604 the connection of the mobile device to an access point on the RCU device is established. Next in step 605 the RCU device is configured and in step 606 the mobile device disconnects from the access point and connects to the Wi-Fi router. Subsequently the procedure moves to step 607. If, in step 603, it is checked that it is not the first time installation the procedure jumps to step 607 directly. In step 607 it is checked if the voice command is received. If the voice command is not received the procedure loops back to step 607, otherwise it proceeds to step 608 in which the voice command is recognized by the voice recognition manager. In step 609 basing on data from the table 253 with voice commands, the IR actions are assigned to the recognized voice command. In step 610 the corresponding IR actions are sent to the RCU device in a form of the HTTP based command. Next, in step 611 it is checked if the confirmation from the RCU device is received. If no the procedure loops back to step 611, otherwise the procedure moves to step 612 in which the confirmation is displayed on the mobile device and the procedure loops back to step 607.

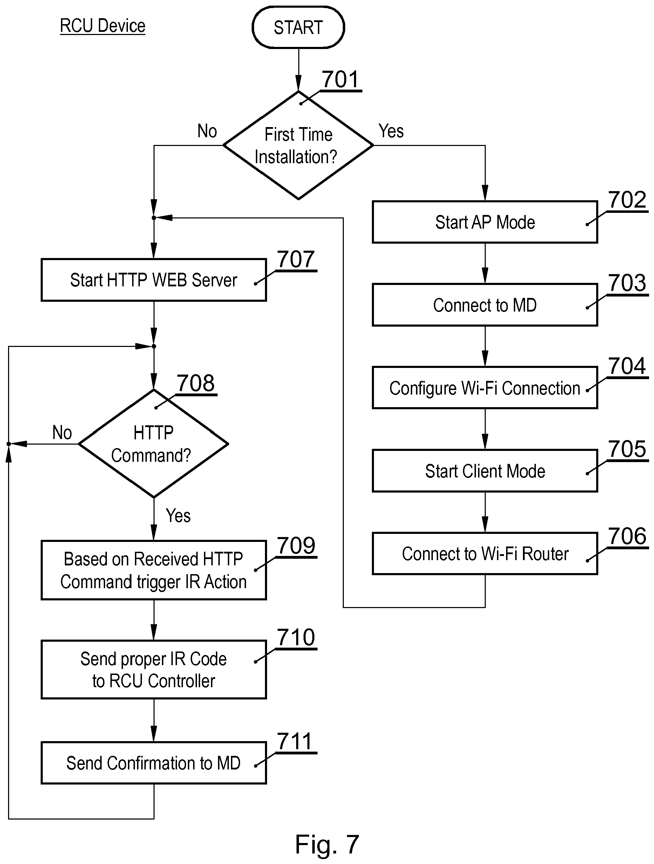

Fig. 7 presents a flow chart representing details of the procedure performed by the RCU device. In step 701 it is checked if it is the first time installation, if yes then in step 702 the access point mode is initiated. Next, in step 703, a connection to the mobile device is established and in step 704 the Wi-Fi connection is configured. Next, in step 705 a client mode is started and in step 706 a connection to the Wi-Fi router is established. Subsequently the procedure moves to step 707. If, in step 701, it is checked that it is not the first time installation the procedure jumps to step 707 directly. In step 707 a HTTP WEB server is started. In step 708, it is checked if the HTTP command is received. If no, the procedure loops back to step 708. If the HTTP command is received, then in step 709, the IR action is triggered basing on the received HTTP command. In step 710 the proper IR code is sent to the RCU Controller 460 and in step 711 the confirmation of sending the IR code is transmitted to the mobile device. Finally the procedure loops back to step 708.

The mobile device 110 can be a smartphone, a tablet, a notebook computer, a smartwatch or any other similar device. Moreover, the mobile device can be integrated with "smart speakers", i.e. a device having a microphone and speakers and powered by a cloud-based artificial intelligence for communicating with the user via voice commands.

The system may be extended by adding other Wi-Fi IR devices to other rooms and creating multi-room controlled environment. In that sense every equipment unit (IR based) present at various rooms could be registered in the system and voice controlled by the user, using still the same user application on the mobile device.

In still another embodiment the system cooperating with several appliances may execute user defined scenarios to control various equipment using specified sequences of actions, not single commands (e.g. 'Shut-down AV system' would send power-down IR commands to all registered appliances at home).

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for remote control of appliances may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A system for controlling an appliance (130) by voice, the system comprising:
- a mobile device (110) comprising:
∘ a voice recognition manager (112) configured to receive from a user, via a microphone (220), a voice command and to recognize the voice command;
∘ a commands table (253) configured to store voice commands and corresponding IR actions;
∘ a wireless data transmission interface (230); and
∘ a user application (111) configured to determine, at the commands table (253), the IR action corresponding to the recognized voice command and to output the IR action via the wireless data transmission interface (230);
- an RCU device (120) integrated with the controlled appliance (130) and comprising:
∘ a wireless data transmission interface (330);
∘ an IR interface (320) to the RCU controller of the controlled appliance (130);
∘ a codes table (353) configured to store IR actions and corresponding IR codes for the controlled appliance (130); and
∘ an IR action execution unit (312) configured to receive the IR action via the wireless data transmission interface (330), to determine, at the codes table (353), the IR code corresponding to the received IR action and to output the determined IR code, via the IR interface (320), to the controlled appliance (130).

2. The system according to claim 1, wherein the wireless data transmission interface (230, 330) is a Wi-Fi interface.

3. The system according to any of previous claims, further comprising a wireless router (140) for handling communication between the mobile device (110) and the RCU device (120).

4. The system according to any of previous claims, wherein the voice recognition manager (112) is configured to communicate with an external voice recognition server (160) configured to recognize the voice command.

5. The system according to any of previous claims, wherein the commands table (253) comprises predefined commands.

6. The system according to any of previous claims, wherein the IR actions are transmitted as HTTP commands.

7. The system according to any of previous claims, wherein the mobile device (110) has a form of smart speakers powered by a cloud-based artificial intelligence for communicating with the user via voice commands.

8. A method for controlling an appliance (130) by voice, the method comprising:
- at a mobile device (110) comprising: a microphone (220); a commands table (253) configured to store voice commands and corresponding IR actions; and a wireless data transmission interface (230):
∘ receiving from a user a voice command;
∘ recognizing the voice command;
∘ determining, at the commands table (253), the IR action corresponding to the recognized voice command; and
∘ outputting the IR action via the wireless data transmission interface (230);
- at an RCU device (120) being a component integrated with the controlled appliance (130) and comprising: a wireless data transmission interface (330); an IR interface (320) to the RCU controller of the controlled appliance (130); and a codes table (353) configured to store IR actions and corresponding IR codes for the controlled appliance (130):
∘ receiving the IR action via the wireless data transmission interface (330);
∘ determining, at the codes table (353), the IR code corresponding to the received IR action; and
∘ outputting the determined IR code, via the IR interface (320), to the controlled appliance (130).

9. A computer program comprising program code means for performing all the steps of the computer-implemented method according to claim 8 when said program is run on a computer.

10. A computer readable medium storing computer-executable instructions performing all the steps of the computer-implemented method according to claim 8 when executed on a computer.
